# EUROPEAN PATENT SPECIFICATION

(11) **EP 3 358 999 B1**
(45) Date of publication and mention of the grant of the patent: **10.03.2021**
(21) Application number: 16801063.5
(22) Date of filing: 08.08.2016
(51) Int. Cl.: A47J 31/44

(54) **A COFFEE MACHINE COMPRISING A RESIDUE CONTAINER**
KAFFEEMASCHINE MIT EINEM RESTBEHÄLTER
MACHINE À CAFÉ COMPORTANT UN RÉCIPIENT POUR RÉSIDUS

(30) Priority: 08.10.2015 TR 201512490
(43) Date of publication of application: 15.08.2018
(73) Proprietor: Arçelik Anonim Sirketi, 34445 Istanbul (TR)
(72) Inventor: ALPTEKIN, Ahmet, 34950 Tuzla/Istanbul (TR); GUNDUZ, Nihat, 34950 Tuzla/Istanbul (TR); GERZELI, Ismail, Tuzla/Istanbul (TR); KARAAGAC, Emre, 34950 Tuzla/Istanbul (TR); COBAN, Omer Burak, 34950 Tuzla/Istanbul (TR)
(86) International application number: PCT/TR2016/050277
(87) International publication number: WO 2017/061963

(56) References cited:
- EP-A2- 1 903 519
- WO-A1-2013/011078
- CN-U- 202 801 251

## Description

The present invention relates to a coffee machine that comprises a residue container that is positioned under the brewing chamber.

In coffee machines, the use of residue containers wherein the liquid dripping from the port through which the coffee is poured is accumulated or wherein the water used in the cleaning of the brewing chamber in which the coffee is brewed is transferred, and that comprises a grill whereon usually a cup is placed is known. The residue containers are usually emptied by the user. From time to time the user controls the residue container and checks whether the container is full. Coffee residue and coffee ground also flow into the residue container and it becomes a problem for the user to understand whether the residue container is full due to the accumulated coffee ground.

In the state of the art Chinese Patent Application No. CN202801251, a coffee machine is disclosed, wherein the water level in the residue container is measured.

In the state of the art Chinese Patent Application No CN203106809, a coffee machine is disclosed, wherein the receptacle in which the coffee residue is accumulated and the residue container have an integrated structure.

In the state of the art Chinese Patent Application No. CN203564095, a coffee machine is disclosed, comprising the residue container and that can brew Turkish coffee.

The aim of the present invention is the realization of a coffee machine that can be operated in a safe manner.

The coffee machine realized in order to attain the aim of the present invention, explicated in the claims, comprises a sensor that is disposed at the portion of the residue container remaining in the body so that the liquid does not drip on the sensor and that enables the measuring of the water accumulated in the residue container. By positioning the sensor at the portion of the residue container remaining in the body, the coffee ground is prevented from being accumulated on the sensor and the problem of the sensor losing function due to getting dirty is solved. In the present invention, the liquid level in the residue container is measured by means of the sensor at intervals. The user is enabled to be warned when the liquid level reaches the overflow limit.

In an embodiment of the present invention, a wall is provided at the base of the residue container so as to be preferably around the sensor in order to prevent the sensor from being affected by the coffee ground accumulated in the residue container. By means of the wall, the coffee ground that drips into the residue container is prevented from passing to the side where the sensor is located and at the same time the residue container is divided into two.

In another embodiment of the present invention, under the grill whereon the cup wherein the brewed coffee is transferred is placed, a channel is arranged, wherein the coffee ground accumulated in the residue container is enabled to be accumulated, and that partially covers residue container. As the coffee-water mixture in the residue container rests, the coffee residues deposit and accumulate in the channel. Since the channel is disposed at the portion of the residue container remaining outside the body, the coffee ground that drips into the residue container cannot pass to the portion where the sensor is located. Thus, the sensor can measure the water level in the residue container without being affected by the coffee residue.

In another embodiment of the present invention, the base of the channel is at a lower level than the base of the residue container. By means of this embodiment, the coffee ground is enabled to be nearly fully accumulated in the channel and the measurement correctness of the sensor is increased.

In another embodiment of the present invention, in the residue container, barriers are used, that prevent the water in the residue container from waving due to any reason.

In the coffee machine of the present invention, in the residue container wherein the dirty water that is used in the cleaning of the brewing chamber and the coffee that overflows or drips from the brewing chamber are accumulated, the sensor is disposed at the portion of the residue container remaining in the body so that no liquid or coffee ground reaches the sensor. Moreover, by means of the wall and the barriers that are added by maintaining the cost advantage, a coffee machine providing ease of use is realized. Thus, the quality perception of the user is improved.

The coffee machine realized to attain the aim of the present invention is illustrated in the attached figures, where:

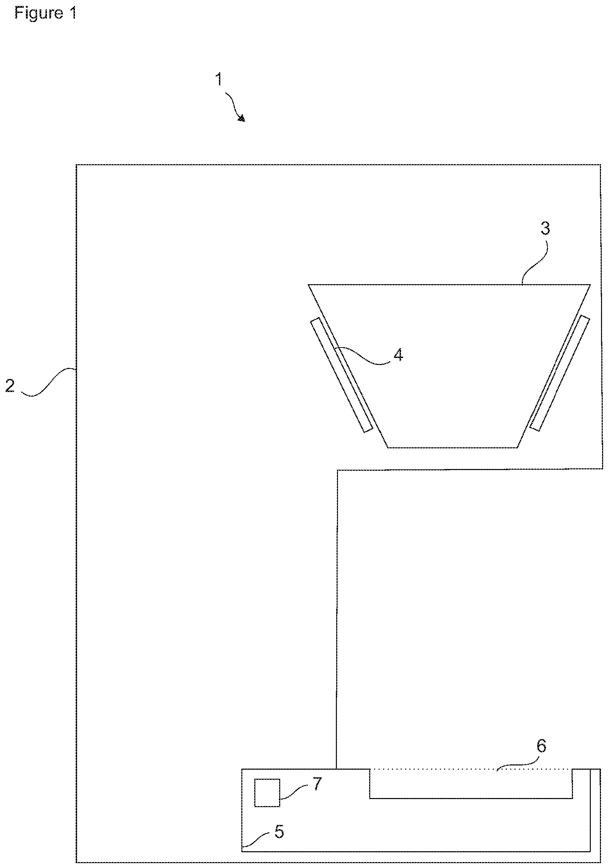

Figure 1 - is the sideways schematic view of a coffee machine.

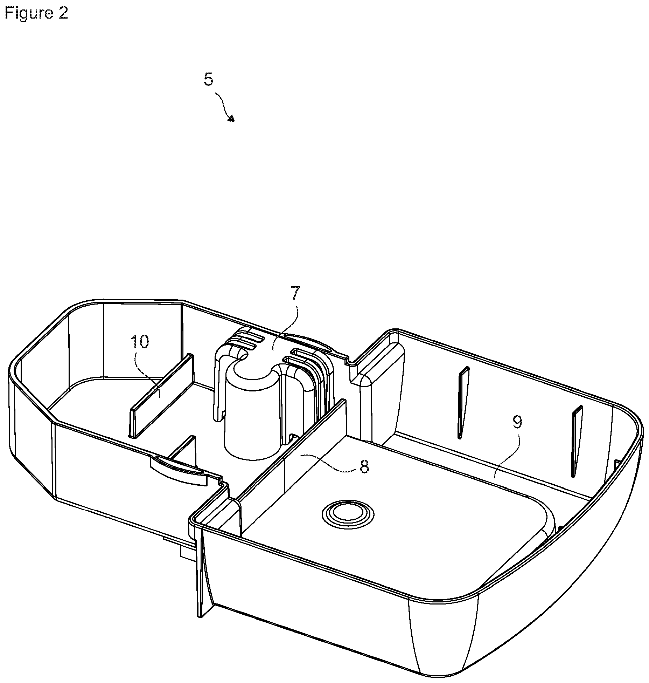

Figure 2 - is the perspective view of the residue container related to an embodiment of the present invention.

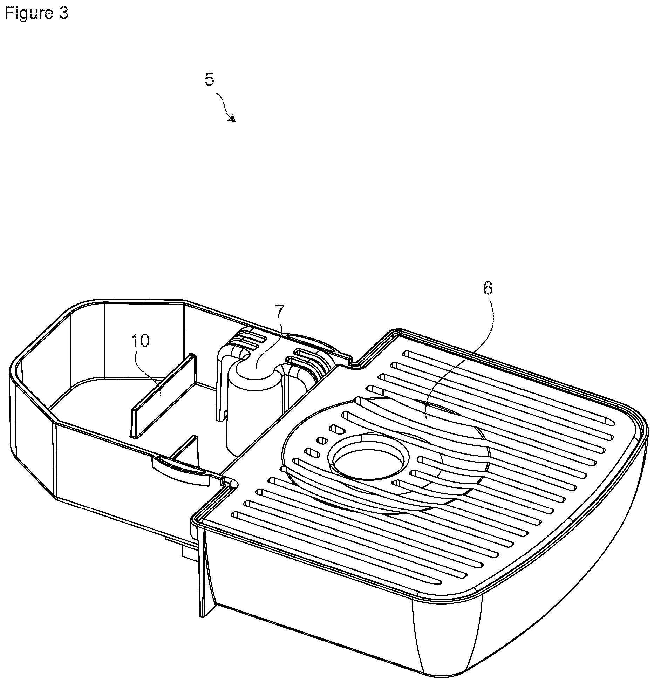

Figure 3 - is the perspective view of the residue container related to another embodiment of the present invention.

The elements illustrated in the figures and the steps are numbered as follows:
1. Coffee machine
2. Body
3. Brewing chamber
4. Heater
5. Residue container
6. Grill
7. Sensor
8. Wall
9. Channel
10. Barrier

The coffee machine (1) comprises a body (2); a brewing chamber (3) that is disposed in the body (2); a heater (4) that enables the brewing chamber (3) to be heated, and a residue container (5) wherein the liquid that drips from the brewing chamber (3) is accumulated, that is positioned so as to remain under the brewing chamber (3) and that has a grill (6) that partially covers the residue container (5).

In the coffee machine (1), the coffee is transferred to the brewing chamber (3) by the user or automatically and is brewed by means of the heater (4). The brewed coffee is transferred to the cup or the glass from the brewing chamber (3). The coffee that remains in the tap (not shown in the figures) of the brewing chamber (3) drips to be accumulated in the residue container (5). During the coffee transfer, the user can place the cup on the grill (6) that partially covers the residue container (5). At the same time, if present in the coffee machine (1), the brewing chamber (3) can be cleaned by spraying water therein, and the dirty water used in the cleaning can be transferred to the residue container (5).

The coffee machine (1) of the present invention comprises the residue container (5) at least a portion of which extends into the body (2), and a sensor (7) that is disposed at the portion of the residue container (5) remaining in the body (2) and that enables the liquid accumulated in the residue container (5) to be measured. The residue container (5) extends into the body so that a portion thereof remains under the brewing chamber (3) and the volume of the residue container (5) is increased. Thus, more dirty water is accumulated in the residue container (5) and the residue container (5) is discharged less frequently. The sensor (7) that is used for the measuring of the level is disposed at the portion of the residue container (5) remaining in the body (2), thus the water that drips or flows from the brewing chamber (3) does not directly fall on the sensor (7). The sensor (7) that is used for the measuring of the liquid level in the residue container (5) can be a mechanical meter that operates with buoy principle or an electronic level meter. The control unit (not shown in the figures) of the coffee machine (1) enables the user to be warned with the information received from the sensor (7).

In an embodiment of the present invention, the coffee machine (1) comprises at least one wall (8) that is disposed around the sensor (7) in the residue container (5) and that prevents the coffee ground from reaching the sensor (7). In this embodiment, the coffee ground accumulated in the residue container (5) is prevented from causing errors in the level measurement and by means of the wall (8) the coffee ground that drips into the residue container (5) is kept away from the sensor (7). The wall (8) can be an upright member that extends perpendicularly to the base of the residue container (5). The wall (8) also divides the residue container (5) into two, namely a portion remaining under the grill (6) and another portion remaining in the body (2).

In another embodiment of the present invention, the coffee machine (1) comprises a channel (9) wherein the coffee ground is accumulated and that is disposed at the base of the residue container (5) so as to be under the grill (6). By enabling the coffee ground in the residue container (5) to deposit in the channel (9), the sensor (7) is prevented from making errors in the measurement. By means of the channel (9), the coffee ground deposits before reaching the portion where the sensor (7) is located.

In another embodiment of the present invention, the level of the channel (9) is lower than the level of the base of the residue container (5). By means of this embodiment, the coffee ground-water mixture in the residue container (5) flows towards the channel (9) and the coffee ground is enabled to deposit in the channel (9). Moreover, by means of the base of the channel (9) being lower than the base of the residue container (5), more coffee ground is enabled to be accumulated in the residue container (5).

In another embodiment of the present invention, the coffee machine (1) comprises at least one barrier (10) that is disposed in the residue container (5) and that prevents the accumulated liquid from waving. The barrier (10) acts as a breakwater in the residue container (5). The sensor (7) is prevented from making erroneous measurements due to reasons like moving the coffee machine (1) or the vibrations generated during operating, etc. by means of the barrier (10), moreover when the residue container (5) is taken out to be discharged or for other reasons, the water accumulated therein is prevented from spilling.

According to the present invention, the coffee machine (1) is suitable to brew Turkish coffee.

In the coffee machine (1) of the present invention, the user is automatically reminded that the residue container (5) should be discharged by adding a sensor (7) measuring the level of the liquid to the residue container (5) that is usually used in coffee machines. By positioning the sensor (7) so that no liquid or coffee residue reaches the sensor (7), the level measurement is carried out in a sensitive and correct manner. The wall (8) that is disposed in front of the sensor (7) and the barriers (10) that are disposed in the reside container (5) are utilized in order to prevent the liquid from waving and the coffee ground from causing erroneous level measurement.

## Claims

1. A Turkish coffee machine (1) **comprising** a body (2); a brewing chamber (3) that is disposed in the body (2); a heater (4) that enables the brewing chamber (3) to be heated, and a residue container (5) wherein the liquid that drips from the brewing chamber (3) is accumulated, that is positioned so as to remain under the brewing chamber (3) and that has a grill (6) that partially covers the residue container (5), **characterized by** the residue container (5) at least a portion of which extends into the body (2) and a sensor (7) that is disposed at the portion of the residue container (5) remaining in the body (2) and that enables the liquid accumulated in the residue container (5) to be measured.

2. A Turkish coffee machine (1) as in Claim 1, **characterized by** at least one wall (8) that is disposed around the sensor (7) in the residue container (5) and that prevents the coffee ground from reaching the sensor (7).

3. A Turkish coffee machine (1) as in any one of the above claims, **characterized by** a channel (9) wherein the coffee ground is accumulated and that is disposed at the base of the residue container (5).

4. A Turkish coffee machine (1) as in Claim 3, **characterized by** the channel (9) the level of the base of which is lower than the level of the base of the residue container (5).

5. A Turkish coffee machine (1) as in any one of the above claims, **characterized by** at least one barrier (10) that is disposed in the residue container (5) and that prevents the accumulated liquid from waving.

## Patentansprüche

1. Eine türkische Kaffeemaschine (1) **umfasst** einen Körper (2), eine Brühkammer (3), die in dem Körper (2) angeordnet ist, eine Heizung (4), die das Erwärmen der Brühkammer (3) ermöglicht und einen Rückstandsbehälter (5), in dem sich die Flüssigkeit ansammelt, die aus der Brühkammer (3) tropft und so positioniert ist, dass sie unter der Brühkammer (3) verbleibt und einen Grill (6) aufweist, der den Rückstandsbehälter (5) nahezu bedeckt; **gekennzeichnet ist sie dadurch,** dass der Rückstandsbehälter (5) sich mindestens mit einem Teil in den Körper (2) erstreckt und einen Sensor (7), der an dem Körper (2) verbleibenden Teil des Rückstandsbehälters (5) angeordnet ist und das Messen der im Rückstandsbehälter (5) angesammelten Flüssigkeit ermöglicht.

2. Eine türkische Kaffeemaschine (1), wie in Anspruch 1 aufgeführt, **ist dadurch gekennzeichnet, dass** mindestens eine Wand (8) um den Sensor (7) im Rückstandbehälter (5) angeordnet ist und verhindert, dass der gemahlene Kaffee den Sensor (7) erreicht.

3. Eine türkische Kaffeemaschine (1), wie in einem der vorherigen Ansprüchen aufgeführt, **ist dadurch gekennzeichnet, dass** ein Kanal (9), worin sich der Kaffeepulver ansammelt, sich am Boden des Rückstandsbehälters (5) befindet.

4. Eine türkische Kaffeemaschine (1), wie in Anspruch 3 aufgeführt, **ist dadurch gekennzeichnet, dass** der Boden des Kanals (9) niedriger ist als der Boden des Rückstandsbehälters (5).

5. Eine türkische Kaffeemaschine (1), wie in einem der vorherigen Ansprüchen aufgeführt, **ist dadurch gekennzeichnet, dass** mindestens eine Barriere (10), die in dem Rückstandsbehälter (5) angeordnet ist und verhindert, dass die angesammelte Flüssigkeit wackelt.

## Revendications

1. Une machine à café turque (1) **comprenant** un corps (2) ; une chambre d'infusion (3) qui est disposée dans le corps (2) ; un chauffage (4) qui permet de chauffer la chambre d'infusion (3), et un récipient à résidus (5) dans lequel le liquide qui s'égoutte de la chambre d'infusion (3) est accumulé, qui est positionné de manière à rester sous la chambre d'infusion (3) et qui comporte une grille (6) qui recouvre partiellement le récipient à résidus (5), **est caractérisé en ce que** le récipient à résidus (5) s'étend au moins en partie dans le corps (2) et **en ce qu'**un capteur (7) est disposé sur la partie du récipient à résidus (5) restant dans le corps (2) et permet de mesurer le liquide accumulé dans le récipient à résidus (5).

2. Une machine à café turque (1) comme dans la déclaration 1, **est caractérisée en ce qu'**au moins une paroi (8) est disposée autour du capteur (7) dans le récipient à résidus (5) et empêche le marc de café d'atteindre le capteur (7).

3. Une machine à café turque (1) comme dans l'une quelconque des déclarations ci-dessus, **est caractérisée en ce qu'**elle comporte un canal (9) dans lequel le café moulu est accumulé et qui est disposé à la base du récipient à résidus (5).

4. Une machine à café turque (1) comme dans la déclaration 3, **est caractérisée en ce que** le canal (9) dont le niveau de la base est inférieur au niveau de la base du récipient à résidus (5).

5. Une machine à café turque (1) comme dans l'une quelconque des déclarations ci-dessus, **est caractérisée en ce qu'**elle comporte au moins une barrière (10) disposée dans le récipient à résidus (5) et qui empêche le liquide accumulé de se déplacer.
